# EUROPÄISCHE PATENTSCHRIFT

(11) **EP 2 066 925 B1**
(45) Veröffentlichungstag und Bekanntmachung des Hinweises auf die Patenterteilung: **03.11.2010**
(21) Anmeldenummer: 07803163.0
(22) Anmeldetag: 03.09.2007
(51) Int. Cl.: F16H 37/08, F16H 1/46

(54) **MEHRSTUFIGES UNTERSETZUNGSGETRIEBE**
MULTI-STAGE REDUCTION GEAR
DÉMULTIPLICATEUR À PLUSIEURS ÉTAGES

(30) Priorität: 30.09.2006 DE 102006046580
(43) Veröffentlichungstag der Anmeldung: 10.06.2009
(73) Patentinhaber: ZF Friedrichshafen AG, 88038 Friedrichshafen (DE)
(72) Erfinder: PESCHECK, Jürgen, 88090 Immenstaad (DE); SCHULZ, Horst, 88045 Friedrichshafen (DE); KIRSCHNER, Tino, 88142 Wasserburg (DE); WEISS, Martin, 88677 Markdorf (DE)
(86) Internationale Anmeldenummer: PCT/EP2007/059177
(87) Internationale Veröffentlichungsnummer: WO 2008/037564

(56) Entgegenhaltungen:
- EP-A- 0 300 905
- DE-A1- 2 338 193
- DE-A1- 2 420 232
- DE-A1- 3 903 517
- DE-A1- 19 700 027
- GB-A- 2 156 475

## Beschreibung

Die vorliegende Erfindung betrifft ein mehrstufiges Untersetzungsgetriebe gemäß dem Oberbegriff des Patentanspruchs 1.

Aus der DE 2420232 A1 ist ein zweistufiges Untersetzungsgetriebe bekannt, bei dem eine erste Untersetzungsstufe als Planetengetriebe ausgebildet ist und bei dem eine zweite Untersetzungsstufe drei Ritzel umfasst, die an jeweils unterschiedlichen Stellen am Umfang in Zahneingriff mit einem Großrad stehen und von denen ein erstes Ritzel drehfest mit dem Planetenträger des Planetengetriebes verbunden ist und die beiden anderen Ritzel über eine Stirnradstufe trieblich mit dem Hohlrad des Planetengetriebes verbunden sind. Bei relativ kompakter Bauform können mit einem derartigen Getriebe bereits sehr hohe Drehmomente hochübersetzend übertragen werden.

Des Weiteren ist aus der DE 19700027 A1 eine Planetengetriebeanordnung mit zwei Planetenradstufen bekannt, wobei beide Planetenstufen in einem einteiligen Hohlrad angeordnet sind. Mit dieser Anordnung soll ein hohes Übersetzungsverhältnis bei kompakter Bauweise erreicht werden.

Schließlich beschreibt die EP 0300905 A1 ein Untersetzungsgetriebe mit einer Planetenradstufe und einem leistungsverzweigten Getriebe mit vier Ritzeln, welche unterteilt sind in zwei identische Gruppen mit je zweien der vier Ritzel. Eines der beiden Ritzel jeder Gruppe wird durch den Planetenträger der genannten Planetenradstufe angetrieben und das andere der beiden Ritzel wird über ein Zahnrad von dem Hohlrad der genannten Planetenstufe angetrieben. Auch hier ist die Zielsetzung ein Getriebe mit hoher Über- bzw. Untersetzung bei kompakter Bauweise zu erhalten.

Der vorliegenden Erfindung liegt die Aufgabe zugrunde, ein mehrstufiges Untersetzungsgetriebe anzugeben, welches für noch höhere Gesamtübersetzungen geeignet ist.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein mehrstufiges Untersetzungsgetriebe vorgeschlagen, bei dem eine erste Untersetzungsstufe als Planetengetriebe ausgebildet ist, mit einem antreibbaren ersten Sonnenrad, mit mehreren in einem ersten drehbar gelagerten Planetenträger drehbar gelagerten ersten Planetenrädern, die in gleichzeitigem Zahneingriff mit dem ersten Sonnenrad und einem ebenfalls drehbar gelagerten ersten Hohlrad stehen, bei dem eine zweite Untersetzungsstufe mindestens zwei Ritzel umfasst, die an unterschiedlichen Stellen am Umfang in Zahneingriff mit einem Großrad stehen und von denen ein erstes Ritzel drehfest mit dem ersten Planetenträger verbunden ist und mindestens ein zweites Ritzel über eine drehrichtungsumkehrende Zahnradstufe trieblich mit dem ersten Hohlrad verbunden ist.

Erfindungsgemäß ist der ersten Untersetzungsstufe eine weitere als Planetenstufe ausgebildete Untersetzungsstufe vorgeschaltet, wobei ein zweiter Planetenträger drehfest mit dem ersten Sonnenrad verbunden ist, zweite Planetenräder im zweiten Planetenträger drehbar gelagert sind und in ständigem Zahneingriff mit einem drehantreibbaren zweiten Sonnenrad und einem mit dem ersten Hohlrad drehfest verbundenen, zweiten Hohlrad stehen.

Die Erfindung zeichnet sich des weiteren dadurch aus, dass die mindestens zwei Ritzel die gleiche Zähnezahl aufweisen und dass die drehrichtungsumkehrende Stirnrad- bzw. kegelrad-Stufe im Verhältnis (u/(u+1)) ins Langsame untersetzt ist, wobei u dem Verhältnis der Hohlrad- zu Sonnenrad-Zähnezahl beim vorgeschalteten Planetengetriebe entspricht.

Auf diese Weise können sehr hohe Übersetzungen dargestellt werden, wobei die Ausführung des Vorschaltgetriebes sehr kompakt und günstig herstellbar ist. Dies gilt insbesondere, wenn das erste und das zweite Hohlrad als ein einziges Hohlradbauteil ausgebildet sind, wobei die ersten und die zweiten Planetenräder mit ihren Verzahnungen an unterschiedlichen axialen Bereichen des Hohlradbauteils eingreifen, oder wenn gar das Hohlradbauteil eine durchgehende Verzahnung aufweist, die kostengünstig herstellbar ist.

Soll das Getriebe als Robotergetriebe verwendet werden, wo es auf Präzision und Spielfreiheit ankommt, können die Ritzel und das Großrad konisch ausgebildet sein, wobei außerdem Einstellmittel für die Einstellung der Axialposition jedes Ritzels gegenüber dem Großrad vorhanden sind, so dass das Verzahnungsspiel einstellbar und minimierbar ist. Das Großrad kann einen Zentraldurchlass aufweisen, der für die Durchführung von Versorgungs- und Steuerleitungen nutzbar ist.

Wenn besonders hohe Drehmomente übertragen werden sollen, können zwei, drei oder noch mehr erfindungsgemäße Untersetzungsgetriebe in der Weise kombiniert werden, dass sie ein gemeinsames Großrad aufweisen.

Das Großrad und die Ritzel können, um besonderen Einbauverhältnissen Rechnung zu tragen, auch als Kegelräder mit nichtparallelen Drehachsen ausgebildet sein.

Die Erfindung wird im Folgenden anhand der beigefügten Figuren beispielhaft näher erläutert.

Es zeigen:
- Fig. 1: einen Längsschnitt einer Ausführungsform eines erfin- dungsgemäßen Getriebes;
- Fig. 2: eine schematische Draufsicht auf eine Ausführungsform eines erfindungsgemäßen Getriebes;
- Fig. 3: eine schematische 3D Ansicht auf eine Ausführungsform eines erfindungsgemäßen Getriebes und
- Fig. 4: eine Draufsicht auf eine weitere Ausführungsform eines erfindungsgemäßen Getriebes.

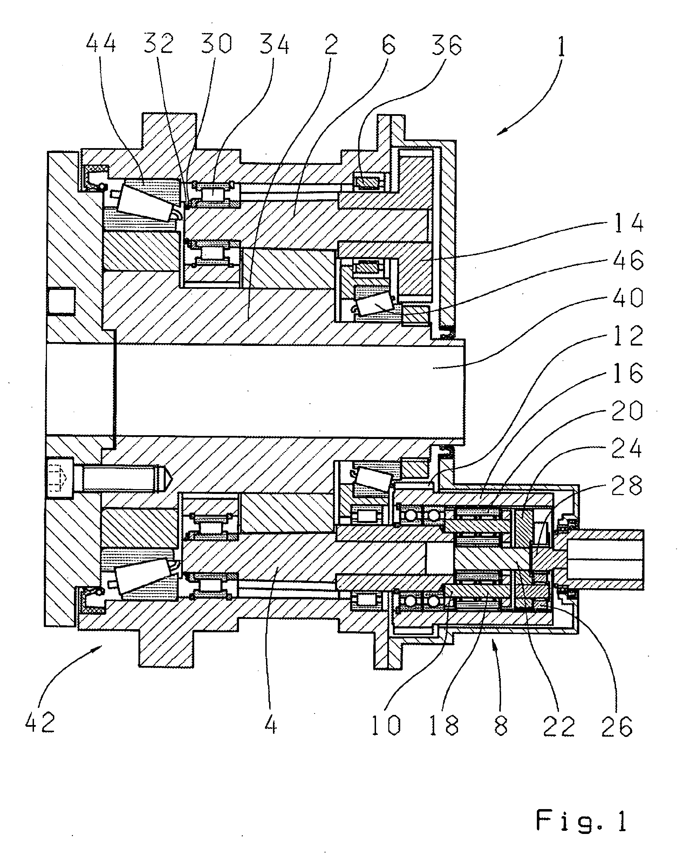

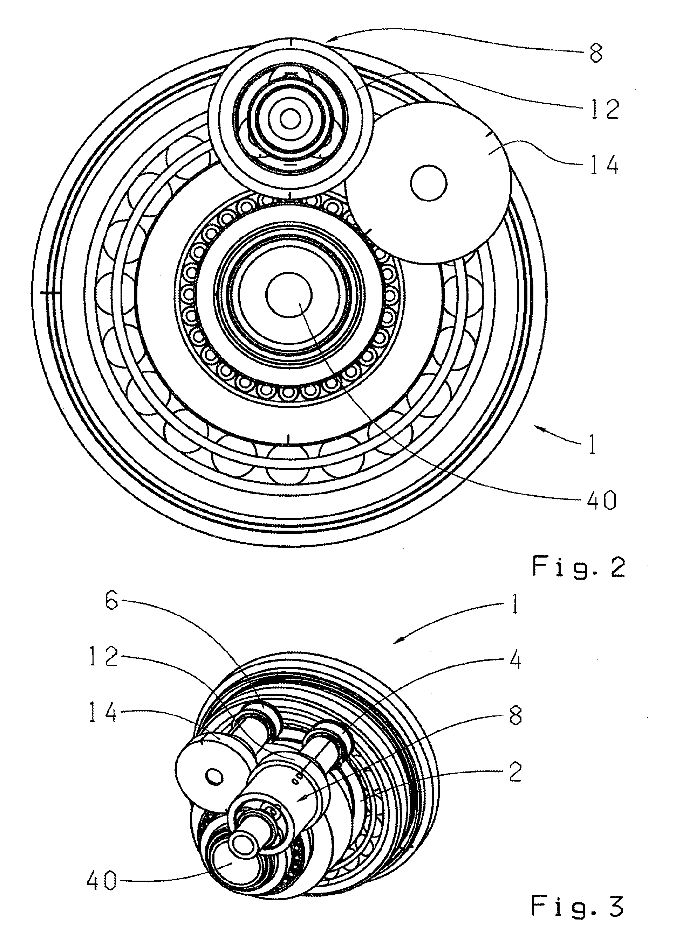

Fig. 1 zeigt ein erfindungsgemäßes mehrstufiges Untersetzungsgetriebe 1. Eine erste Untersetzungsstufe wird gebildet aus einem Planetengetriebe 8, während eine zweite Untersetzungsstufe zwei Ritzel 4, 6 umfasst, die mit einem Großrad 2 an unterschiedlichen Stellen am Umfang des Großrades in Eingriff sind. Dabei ist das erste Ritzel 4 drehfest verbunden mit einem Planetenträger 10 des Planetengetriebes 8 und das zweite Ritzel 6 ist über eine von Stirnrädern 12, 14 gebildete Stirnradstufe in trieblicher Verbindung mit einem Hohlrad 16 des Planetengetriebes 8. Ober- und unterhalb der Mittellinie in Fig. 1 sind verschiedene Schnittebenen gezeigt. Aus Fig. 2 und 3 ist die Lage der Stirnräder 12, 14 zueinander ersichtlich, die miteinander in Eingriff sind.

Das Planetengetriebe 8 wirkt also als Differentialgetriebe, bei dem Planetenträger 10 und Hohlrad 16 über die Stirnradstufe 12, 14, die Ritzel 4,6 und das Großrad 2 miteinander trieblich gekoppelt sind.

In dem Planetenträger 10 sind auf Planetenbolzen 18 Planetenräder 20 drehbar gelagert, welche in gleichzeitigem Zahneingriff mit dem Hohlrad 16 und einem Sonnenrad 22 stehen.

Dem aus Sonnenrad 22, Planetenrädern 20 und Hohlrad 16 gebildeten Planetengetriebe 8 ist eine weitere, als Planetenstufe ausgebildete Untersetzungsstufe vorgeschaltet. Diese umfasst die auf dem Planetenträger 24 gelagerten Planetenräder 26, die in gleichzeitigem Zahneingriff mit dem von einem nicht gezeigten Elektromotor antreibbaren Sonnenrad 28 und dem Hohlrad 16 stehen.

Dabei ist wesentlich, dass die Hohlräder der beiden Planetenstufen drehfest miteinander verbunden sind. In der dargestellten Ausführungsform sind die Hohlräder in einem Hohlradbauteil 16 vereint, welches sogar eine durchgehende Verzahnung aufweist. Die Planetenräder 20 und 26 sind also an unterschiedlichen axialen Bereichen desselben Hohlrads 16 mit diesem in Eingriff.

Die Tatsache, dass das Hohlrad während des Betriebes nicht stillsteht, wirkt sich dabei in vorteilhafter Weise auf die Übersetzung der vorgeschalteten Planetenstufe aus.

Sowohl die Ritzel 4, 6 als auch das Großrad 2 sind konisch ausgebildet. Einstellscheiben 30, welche zwischen dem Sprengring 32 und dem Lagerinnenring des Ritzelagers 34 angeordnet sind, dienen als Einstellmittel für die Einstellung der Axialposition jedes Ritzels 4,6 gegenüber dem Großrad 2. Damit kann das Verzahnungsspiel zwischen Ritzel 4,6 und Großrad 2, das sich auf das Gesamtspiel des Getriebes am stärksten auswirkt, eingestellt bzw. eliminiert werden. Für die Ritzel 4, 6 ist jeweils noch ein zweites Lager 36 auf der anderen Seite der Verzahnungsebene angeordnet, welches axial zwischen dem Ritzel und der Verzahnungsebene der Stirnräder 12, 14 angeordnet ist.

Das Großrad weist einen Zentraldurchlass 40 auf, der zur Durchführung von Steuer und Versorgungsleitungen genutzt werden kann.

Zwischen dem Großrad 2 und der relativ zum Großrad verdrehbaren Baueinheit 42, in welcher auch die Ritzel gelagert sind, sind zwei axial angestellte Lager 44, 46 in O-Anordnung vorhanden. Diese Art der Lagerung ist präzise und erlaubt hohe Axial- und Querkräfte abzustützen.

Gleiche Positionen sind in den Figuren mit gleichen Bezugsziffern versehen.

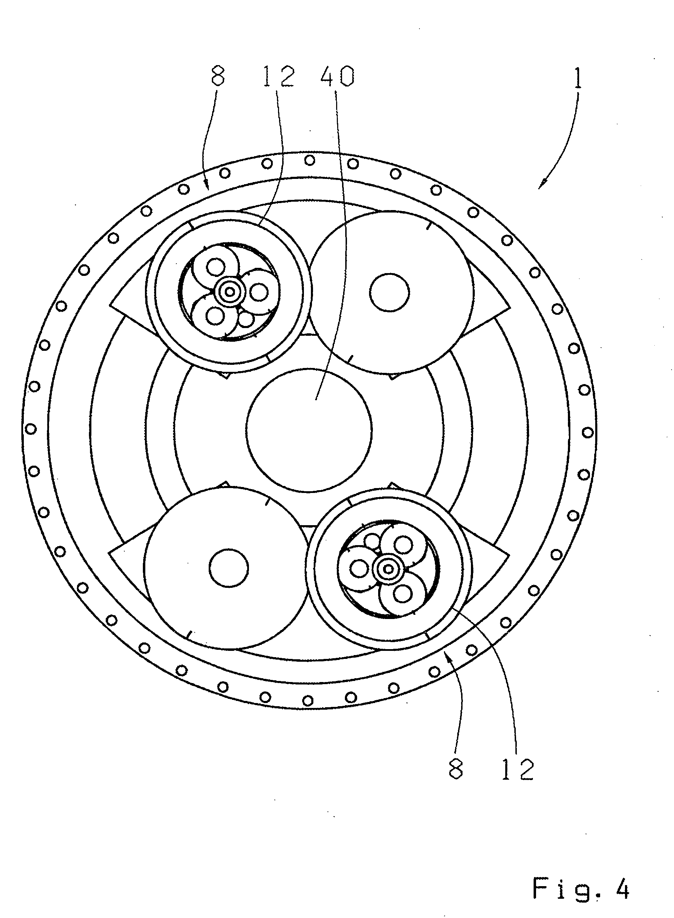

Fig. 4 zeigt in der Draufsicht eine Ausgestaltung der Erfindung, bei welcher zwei gleichartige Untersetzungsgetriebe ein gemeinsames Großrad teilen, so dass nicht nur zwei, sondern vier Ritzel mit dem Großrad kämmen. Auf diese Weise wird eine Verdoppelung des übertragbaren Drehmoments und der Übertragbaren Leistung erzielt.

### Bezugszeichen

- 1: Untersetzungsgetriebe
- 2: Großrad
- 4: Ritzel
- 6: Ritzel
- 8: Planetengetriebe
- 10: Planetenträger
- 12: Stirnrad
- 14: Stirnrad
- 16: Hohlrad
- 18: Planetenbolzen
- 20: Planetenrad
- 22: Sonnenrad
- 24: Planetenträger
- 26: Planetenrad
- 28: Sonnenrad
- 30: Einstellscheibe
- 32: Sprengring
- 34: Lager
- 36: Lager
- 40: Zentraldurchlass
- 42: Baueinheit
- 44: Lager
- 46: Lager

## Patentansprüche

1. Mehrstufiges Untersetzungsgetriebe (1) bei dem eine erste Untersetzungsstufe als Planetengetriebe ausgebildet ist, mit einem antreibbaren ersten Sonnenrad (22), mit mehreren in einem ersten drehbar gelagerten Planetenträger (10) drehbar gelagerten ersten Planetenrädern (20), die in gleichzeitigem Zahneingriff mit dem ersten Sonnenrad (22) und einem ebenfalls drehbar gelagerten ersten Hohlrad (16) stehen, bei dem eine zweite Untersetzungsstufe mindestens zwei Ritzel (4, 6) umfasst, die an unterschiedlichen Stellen am Umfang in Zahneingriff mit einem Großrad (2) stehen, und von denen ein erstes Ritzel (4) drehfest mit dem ersten Planetenträger (10) verbunden ist und mindestens ein zweites Ritzel (6) über eine drehrichtungsumkehrende Zahnradstufe (12, 14) trieblich mit dem ersten Hohlrad (16) verbunden ist, **dadurch gekennzeichnet, dass** der ersten Untersetzungsstufe eine weitere als Planetenstufe ausgebildete Untersetzungsstufe vorgeschaltet ist, wobei ein zweiter Planetenträger (24) drehfest mit dem ersten Sonnenrad (22) verbunden ist, zweite Planetenräder (26) im zweiten Planetenträger (24) drehbar gelagert sind und in ständigem Zahneingriff mit einem drehantreibbaren zweiten Sonnenrad (28) und einem mit dem ersten Hohlrad (16) drehfest verbundenen, zweiten Hohlrad (16) stehen, dass die mindestens zwei Ritzel (4, 6) der Abtriebsstufe die gleiche Zähnezahl aufweisen und dass die umkehrende Stirnrad- bzw. Kegelrad-Stufe (12, 14) im Verhältnis (u/(u+1)) ins Langsame untersetzt ist, wobei u dem Verhältnis der Hohlrad- zu Sonnenrad-Zähnezahl beim vorgeschalteten Planetengetriebe (8) entspricht.

2. Untersetzungsgetriebe nach Anspruch 1, **dadurch gekennzeichnet, dass** das erste und das zweite Hohlrad als ein einziges Hohlradbauteil (16) ausgebildet sind, wobei die ersten und die zweiten Planetenräder (20, 26) mit ihren Verzahnungen an unterschiedlichen axialen Bereichen des Hohlradbauteils (16) eingreifen.

3. Untersetzungsgetriebe nach Anspruch 2, **dadurch gekennzeichnet, dass** das Hohlradbauteil (16) eine durchgehende Verzahnung aufweist.

4. Untersetzungsgetriebe nach einem der vorangehenden Ansprüche
**dadurch gekennzeichnet, dass** die Ritzel (4, 6) und das Großrad (2) konisch ausgebildet sind, und dass Einstellmittel (30), für die Einstellung der Axialposition jedes Ritzels gegenüber dem Großrad vorhanden sind.

5. Untersetzungsgetriebe nach einem der vorangehenden Ansprüche
**dadurch gekennzeichnet, dass** das Großrad (2) einen Zentraldurchlass (40) aufweist.

6. Untersetzungsgetriebe nach einem der vorangehenden Ansprüche,
**dadurch gekennzeichnet, dass** mindestens ein weiteres gleichartiges Untersetzungsgetriebe vorhanden ist, wobei die mindestens zwei Untersetzungsgetriebe ein gemeinsames Großrad aufweisen.

7. Untersetzungsgetriebe nach einem der vorangehenden Ansprüche" **dadurch gekennzeichnet, dass** das Großrad (2) und die Ritzel als Kegelräder mit nichtparallelen Drehachsen ausgebildet sind.

## Claims

1. Multi-stage reduction gearing (1) in which a first reduction stage is designed as a planetary gear set, having a driveable first sun gear (22), having a plurality of first planet gears (20) rotatably mounted in a first rotatably mounted planet carrier (10), which first planet gears (20) are in meshing engagement simultaneously with the first sun gear (22) and with a likewise rotatably mounted first ring gear (16), in which a second reduction stage comprises at least two pinions (4, 6) which are in meshing engagement at different points on the circumference with a large gear (2) and of which a first pinion (4) is rotationally fixedly connected to the first planet carrier (10) and at least one second pinion (6) is connected in terms of drive to the first ring gear (16) by means of a rotational-direction-reversing gear stage (12, 14), **characterized in that** a further reduction stage which is designed as a planet stage is connected upstream of the first reduction stage, with a second planet carrier (24) being rotationally fixedly connected to the first sun gear (22), second planet gears (26) being rotatably mounted in the second planet carrier (24) and being in permanent meshing engagement with a second sun gear (28) which can be driven in rotation and with a second ring gear (16) which is rotationally fixedly connected to the first ring gear (16), **in that** the at least two pinions (4, 6) of the drive output stage have the same number of teeth and **in that** the reversing spur gear or bevel gear stage (12, 14) provides a speed reduction in the ratio (u/(u+1)), where u is the ratio of ring gear number of teeth to sun gear number of teeth in the planetary gear set (8) connected upstream.

2. Reduction gearing according to Claim 1, **characterized in that** the first and the second ring gear are formed as a single ring gear component (16), with the first and the second planet gears (20, 26) engaging with their toothings on different axial regions of the ring gear component (16).

3. Reduction gearing according to Claim 2, **characterized in that** the ring gear component (16) has a continuous toothing.

4. Reduction gearing according to one of the preceding claims, **characterized in that** the pinions (4, 6) and the large gear (2) are of conical design, and **in that** adjusting means (30) are provided for adjusting the axial position of each pinion relative to the large gear.

5. Reduction gearing according to one of the preceding claims, **characterized in that** the large gear (2) has a central passage (40).

6. Reduction gearing according to one of the preceding claims, **characterized in that** at least one further similar reduction gearing is provided, with the at least two reduction gearings having a common large gear.

7. Reduction gearing according to one of the preceding claims, **characterized in that** the large gear (2) and the pinions are designed as bevel gears with non-parallel rotational axes.

## Revendications

1. Démultiplicateur à plusieurs étages (1), dans lequel un premier étage de démultiplication est réalisé sous forme d'engrenage planétaire, avec une première roue solaire entraînable (22), avec plusieurs premières roues planétaires (20) montées à rotation dans un premier support planétaire rotatif (10), qui sont en engagement denté avec la première roue solaire (22) et avec une première couronne (16) également montée à rotation, un deuxième étage de démultiplication comprenant au moins deux pignons (4, 6), qui sont en engagement denté avec une grande roue (2) en différents endroits sur la périphérie, et dont un premier pignon (4) est connecté de manière solidaire en rotation au premier support planétaire (10) et au moins un deuxième pignon (6) est connecté par entraînement à la première couronne (16) par le biais d'un étage de roue dentée inversant le sens de rotation (12, 14), **caractérisé en ce qu'**avant le premier étage de démultiplication est monté un autre étage de démultiplication réalisé sous forme d'étage planétaire, un deuxième support planétaire (24) étant connecté de manière solidaire en rotation à la première roue solaire (22), des deuxièmes roues planétaires (26) étant montées à rotation dans le deuxième support planétaire (24) et étant en engagement denté constant avec une deuxième roue solaire (28) pouvant être entraînée en rotation et avec une deuxième couronne (16) connectée de manière solidaire en rotation à la première couronne (16), **en ce que** les au moins deux pignons (4, 6) de l'étage de sortie présentent le même nombre de dents et **en ce que** l'étage de pignon droit ou de pignon conique (12, 14) inversant le sens est démultiplié dans le sens du ralenti dans un rapport (u/(u+1)), u étant le rapport du nombre de dents de la couronne à la roue solaire, dans le cas d'un engrenage planétaire (8) monté en amont.

2. Démultiplicateur selon la revendication 1, **caractérisé en ce que** la première et la deuxième couronne sont réalisées sous forme de composant de couronne unique (16), les première et deuxième roues planétaires (20, 26) venant en prise avec leurs dentures avec des régions axiales différentes du composant de couronne (16).

3. Démultiplicateur selon la revendication 2, **caractérisé en ce que** le composant de couronne (16) présente une denture continue.

4. Démultiplicateur selon l'une quelconque des revendications précédentes, **caractérisé en ce que** les pignons (4, 6) et la grande roue (2) sont réalisés sous forme conique, et **en ce que** des moyens d'ajustement (30), pour l'ajustement de la position axiale de chaque pignon par rapport à la grande roue, sont présents.

5. Démultiplicateur selon l'une quelconque des revendications précédentes, **caractérisé en ce que** la grande roue (2) présente un passage central (40).

6. Démultiplicateur selon l'une quelconque des revendications précédentes, **caractérisé en ce qu'**au moins un autre démultiplicateur de même type est prévu, les au moins deux démultiplicateurs ayant une grande roue commune .

7. Démultiplicateur selon l'une quelconque des revendications précédentes, **caractérisé en ce que** la grande roue (2) et les pignons sont réalisés sous forme de roues coniques avec des axes de rotation non parallèles.
